# EUROPEAN PATENT APPLICATION

(11) **EP 2 587 355 A1**
(43) Date of publication of application: **01.05.2013**
(21) Application number: 11187290.9
(22) Date of filing: 31.10.2011
(51) Int. Cl.: G06F 3/048

(54) **Electronic device and method of character entry**

(71) Applicant: Research In Motion Limited, Waterloo, ON N2L 3W8 (CA)
(72) Inventor: Griffin, Jason, Tyler, Waterloo, Ontario N2L 3W8 (CA); Pasquero, Jerome, Waterloo, Ontario N2L 3W8 (CA)
(74) Representative: MERH-IP Matias Erny Reichl Hoffmann

(57) **Abstract**

A method includes displaying, on a touch-sensitive display, a keyboard including selectable keys associated with primary characters, responsive to detecting a touch at a location associated with one of the keys, entering one of the primary characters associated with the one of the keys, and responsive to detecting a gesture on the keyboard, moving at least a first key of the keys of the keyboard while maintaining a location of at least a second key of the keys of the keyboard, to facilitate selection of one of a plurality of secondary characters.

## Description

### FIELD OF TECHNOLOGY

The present disclosure relates to electronic devices including, but not limited to, portable electronic devices and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive input device, such as a touchscreen display, is particularly useful on handheld devices, which are small and may have limited space for user input and output. Improvements in electronic devices with displays are desirable.

### SUMMARY

According to one example, a method includes displaying, on a touch-sensitive display, a keyboard including selectable keys associated with primary characters, responsive to detecting a touch at a location associated with one of the keys, entering one of the primary characters associated with the one of the keys, and responsive to detecting a gesture on the keyboard, moving at least a first key of the keys of the keyboard while maintaining a location of at least a second key of the keys of the keyboard, to facilitate selection of one of a plurality of secondary characters.

According to another example, an electronic device includes a touch-sensitive display to display a keyboard including selectable keys associated with primary characters, and at least parts of secondary characters between the keys, and a processor coupled to the display to enter one of the primary characters associated with one of the keys when a touch is detected at a location associated with the one of the keys, and move at least one of the keys of the keyboard while maintain a location of at least one other of the keys of the keyboard, to facilitate selection of one of the secondary characters when a gesture is detected on the keyboard.

### BRIEF DESCRIPTION OF THE DRAWINGS

Embodiments of the present disclosure will now be described, by way of example only, with reference to the attached Figures, wherein:

FIG. 1 is a block diagram of an example of a portable electronic device in accordance with the disclosure;

Fig. 2 is a front view of an example of a portable electronic device in accordance with the disclosure;

FIG. 3 is a flowchart illustrating a method of character entry in accordance with the disclosure; and

FIG. 4 through FIG. 10 are front views of examples of a portable electronic device in accordance with the present disclosure.

### DETAILED DESCRI PTI ON

The following describes an electronic device and a method that includes displaying, on a touch-sensitive display, a keyboard including selectable keys associated with primary characters, responsive to detecting a touch at a location associated with one of the keys, entering one of the primary characters associated with the one of the keys, and responsive to detecting a gesture on the keyboard, moving at least a first key of the keys of the keyboard while maintaining a location of at least a second key of the keys of the keyboard, to facilitate selection of one of a plurality of secondary characters.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, such as a portable electronic device. Examples of portable electronic devices include wireless communication devices such as pagers, mobile or cellular phones, smartphones, wireless organizers, PDAs, notebook computers, netbook computers, tablet computers, and so forth. The portable electronic device may also be a portable electronic device without wireless communication capabilities. Examples include handheld electronic game device, digital photograph album, digital camera, notebook computers, netbook computers, tablet computers, or other device.

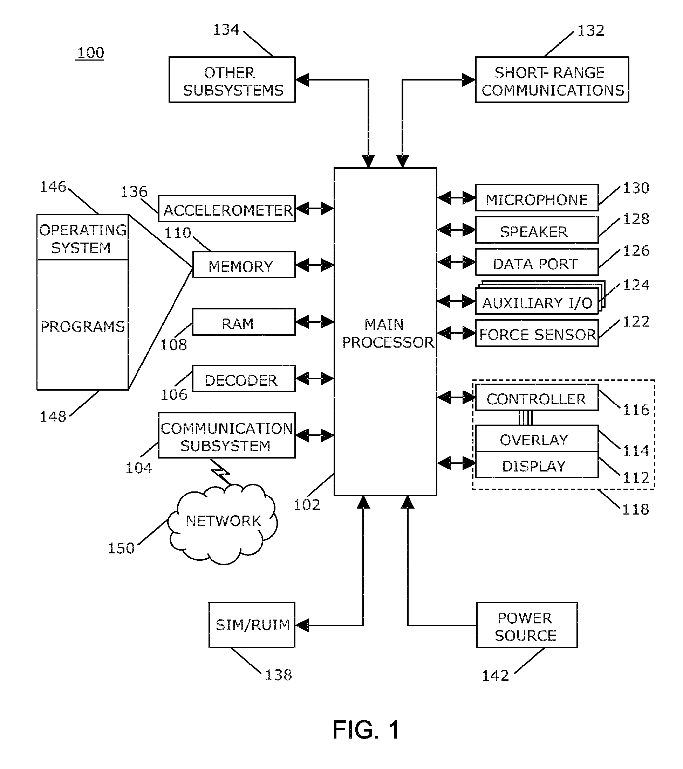

A block diagram of an example of a portable electronic device 100 is shown in FIG. 1. The portable electronic device 100 includes multiple components, such as a processor 102 that controls the overall operation of the portable electronic device 100. The portable electronic device 100 presently described optionally includes a communication subsystem 104 and a short-range communications 132 module to perform various communication functions, including data and voice communications. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an orientation sensor such as an accelerometer 136 to detect direction of gravitational forces or gravity-induced reaction forces so as to determine, for example, the orientation of the portable electronic device 100.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range com m unications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104, for example.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. When a touch begins, one or more signals are provided to the controller 116 and the origin of the touch may be determined from the signals. The origin may be a point or an area, for example. Signals may be provided to the controller at regular intervals in time for a touch, also known as sampling, such that changes in location of the touch may be detected. A touch may be detected from any suitable input member, such as a finger, thumb, appendage, or other objects, for example, a stylus, pen, or other pointer, depending on the nature of the touch-sensitive display 118. The controller 116 and/or the processor 102 may detect a touch by any suitable input member on the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 that begins at an origin point and continues to an end point. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A hover may be a touch at a location that is generally unchanged over a period of time or is associated with the same selection item for a period of time.

In some example embodiments, an optional force sensor 122, or force sensors, is disposed in any suitable location, for example, between the touch-sensitive display 118 and a back of the portable electronic device 100 to detect a force imparted by a touch on the touch-sensitive display 118. The force sensor 122 may be a force-sensitive resistor, strain gauge, piezoelectric or piezoresistive device, pressure sensor, or other suitable device. Force as utilized throughout the specification refers to force measurements, estimates, and/or calculations, such as pressure, deformation, stress, strain, force density, force-area relationships, thrust, torque, and other effects that include force or related quantities.

Force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zoom ing.

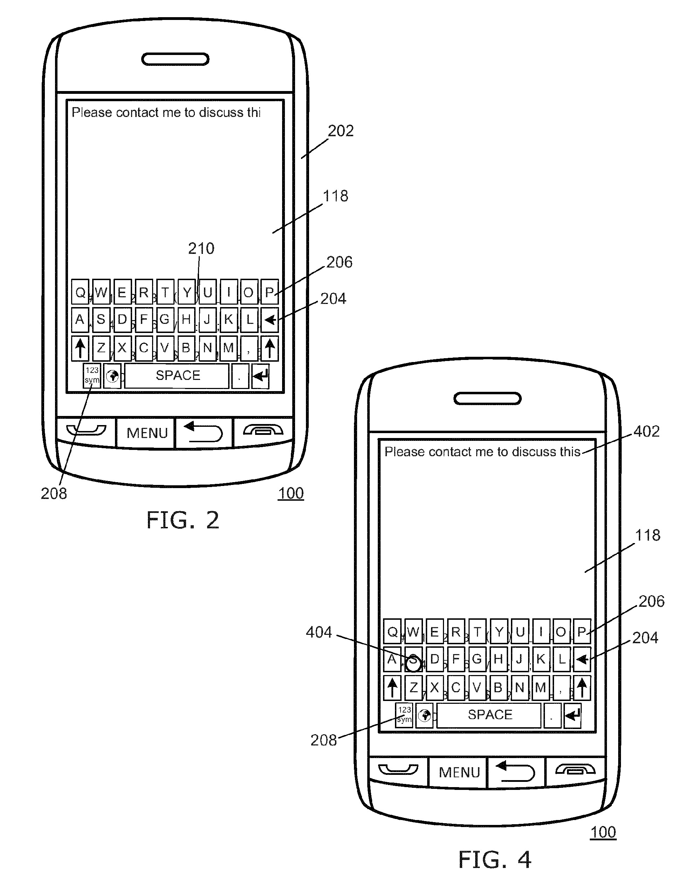

A front view of an example of the electronic device 100 is shown in FIG. 2. The electronic device 100 includes a housing 202 in which the touch-sensitive display 118 is disposed. The housing 202 is utilized to enclose components such as the components shown in FIG. 1.

A keyboard 204 may be displayed on the touch-sensitive display. In the example illustrated in FIG. 2, the keyboard 204 is a QWERTY keyboard. Other keyboards such as QWERTZ, AZERTY, or Dvorak keyboards may be utilized.

The keyboard 204 includes the keys 206. The keys 206 are generally rectangular and spaced apart by a small spacing that is less than the width of the keys 206. Each of the keys 206 is associated with a primary character or a function. In the example illustrated in FIG. 2, the primary characters associated with the keys include the letters of the alphabet, punctuation marks including the period and comma, and a space. Other keys 206 are associated with functions including shift, backspace, and return functions. One key 208 is associated with a symbol function.

Secondary characters 210, including the numbers 0 through 9, and symbols, such as punctuation marks and other symbolic characters are displayed such that these secondary characters are at least partially visible between the keys 206 of the keyboard 204. The secondary characters 210 may be displayed utilizing attributes that differ from the attributes of the primary characters or the keys 206 associated with the primary characters of the keyboard 204. For example, the secondary characters 210 may be displayed utilizing a font that is of lower contrast than the font utilized for the primary characters. Utilizing different attributes than those of the primary characters and the keys 206, the secondary characters 21 0 appear to be on a different level, below the keys 206.

The key 208 may be utilized to change the keyboard 204 to symbols, which may include the secondary characters 210, or may include further symbols not otherwise displayed on the touch-sensitive display 118.

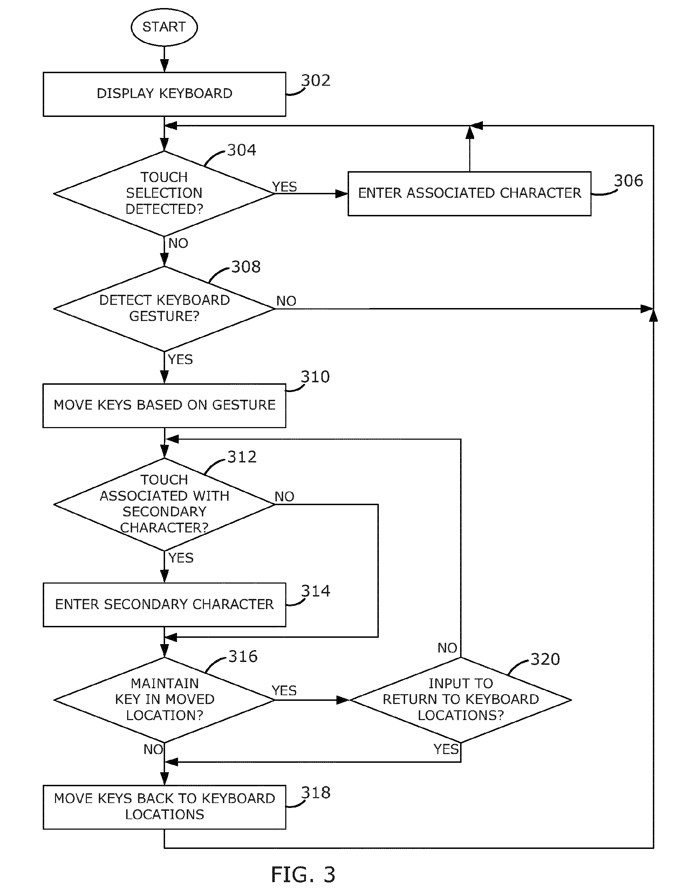

A flowchart illustrating a method of character entry at an electronic device is shown in FIG. 3. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

The process may be carried out in any suitable program or application in which characters, such as alphabetical, numerical, and symbolic characters, are input. Examples of suitable applications include email, text messaging, calendar, tasks, address book, map, Web browser, word processing, and so forth. Information from the application is displayed on the display 112 of the portable electronic device 100.

The keyboard 204 is displayed at 302. The keyboard 204 includes the primary characters. The secondary characters 210 may be displayed between the keys 206 of the keyboard, as described above with reference to FIG. 2. The keyboard 204 may be displayed when composing an email, text message, calendar event, task, contact for an address book, when entering data into a character entry field, or for any other character entry.

When a touch on the touch-sensitive display 118, is detected at 304, at a touch location associated with a key 206 and the touch does not move from the area associated with the key 206 before the end of the touch is detected, the method proceeds to 306 and the primary character associated with the key 206 is entered. The character may be entered into a field displayed on the touch-sensitive display 118, for example.

When a touch on the touch-sensitive display 118, is detected and the touch moves at 304, the method proceeds to 308. A determination is made at 308 whether or not the touch is a keyboard gesture. A keyboard gesture may be any suitable gesture that is associated with keys 206 or with the keyboard 204, to facilitate selection of a secondary character or characters 210. Keyboard gestures may include gestures that begin on a key 206 of the keyboard 204 , multi-touch gestures that begin on two keys 206 of the keyboard 204, gestures that begin and continue between columns of keys 206 or between rows of keys 206 of the keyboard 204, or any other suitable gesture. The keyboard gesture may be detected utilizing attributes of the gesture and determining, based on the attributes of the gesture, whether the gesture is a keyboard gesture. When a keyboard gesture is detected at 308, the process continues at 310.

Keys 206 of the keyboard 204 are moved at 310. Some of the keys 206 are moved while the locations or positions of other keys are maintained, i.e., the other keys do not move. The keys 206 that are moved are determined based on the gesture detected at 308. For example, the keys 206 that are moved may be dependent on the origin of the gesture, or origins in the example of a multi-touch gesture, the direction of the gesture, the length or distance travelled, a location of the touch part way through the gesture, such as a location of touch in the middle or half way along the path of the gesture, or any other suitable gesture attributes. When the keys 206 are moved, the secondary characters 210 are not moved and the secondary characters 210 located in the area from which the keys 206 are moved, may be selected. Selection of the secondary characters is thereby facilitated. The key movement may be animated such that the keys appear to move smoothly along the touch-sensitive display 118.

When a touch associated with a secondary character 210, is detected at 312, the process continues at 314 and the secondary character 210 is entered. A touch may be associated with a secondary character 210 when the touch is detected at an area associated with the character.

When a touch associated with a secondary character 210 is not detected at 312, or after entry of the secondary character at 314, the process continues at 316. At 316, a determination is made whether or not to maintain the keys in the locations to which they were moved at 310. The determination may be dependent on any suitable factors such as the gesture utilized to move the keys 204. For example, a gesture between keys may move the keys 206 to facilitate selection of one of the secondary characters 210 such that the keys are returned to the original keyboard positions after entry of one secondary character 210. A multi-touch gesture including two touches that originate at adjacent keys 206 and move apart may move the keys 206 until another gesture is received to move the keys 206 back to the keyboard positions. The determination may also be dependent on time such that the keys 206 are moved for a predetermined time period or are moved back to the keyboard positions after a threshold time has elapsed after a selection.

When the keys are not maintained in the locations to which they were moved, the keys are moved back to the original keyboard positions or locations at 318. When the keys are maintained in the locations to which they were moved, the process continues at 320. When an input is detected, such as a gesture, that is utilized to return the keys 206 to the keyboard positions or locations at 320, the keys are moved back to the original keyboard positions or locations at 318. When the input is not detected, the process continues at 312. The input may be a gesture, as indicated above, or may be any other suitable input such as a touch at a key 206 associated with a primary character.

Examples of character entry at a portable electronic device are illustrated in FIG. 4 through FIG. 10. In the examples illustrated, the keyboard 204 is displayed along with secondary characters 210 that are at least partially displayed between the keys 206 of the keyboard 204. Characters are entered in a field 402 of, for example, an email.

In the example shown in FIG. 4, a touch is detected at a location associated with a key 206 at 304. The touch is illustrated by the circle 404 on the key 206 associated with the letter S. The character "s" is selected and is entered into the field 402 at 306.

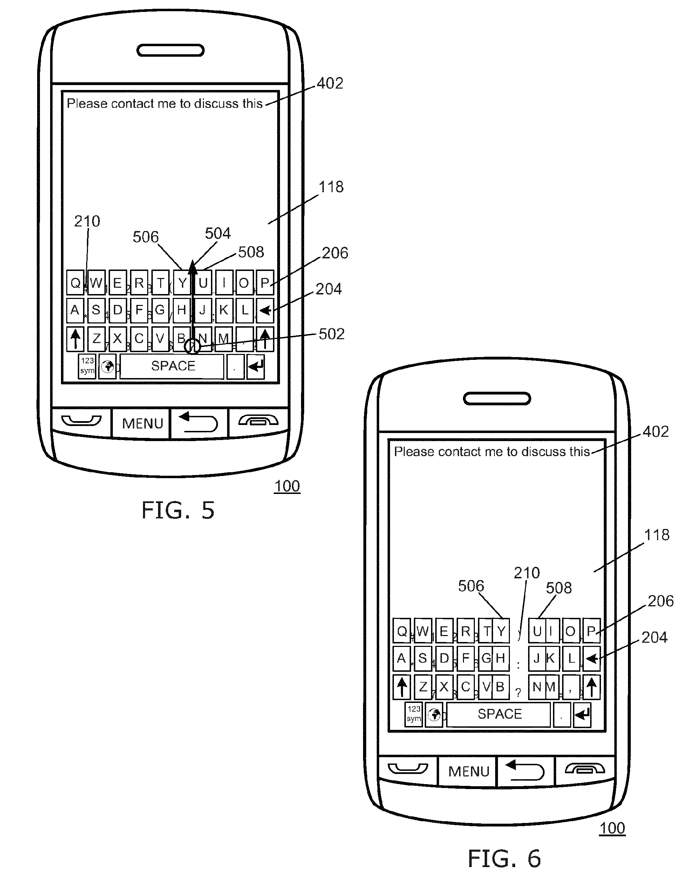

Referring to FIG. 5, a touch is detected and a key 206 is not selected. Instead, a gesture is detected at 308, beginning at the origin 502 and continuing in the direction of the arrow 504. Thus, the gesture begins between the keys 206 associated with the characters "B" and "N", and continues between the columns of keys 206. The keys 206 in the two columns 506, 508 on either side of the gesture, are moved apart at 310 such that the keys in the column 506 are moved to the left and overlap with the keys in the adjacent column to the left, and the keys in the column 508 are moved to the right and overlap with the keys in the adjacent column to the right, increasing the separation between columns of keys, as illustrated in the example of FIG. 6.

The terms top, bottom, right, and left are utilized herein for the purpose of providing a reference and refer to an area of the portable electronic device 100 relative to the orientation in which the keyboard 204 is displayed.

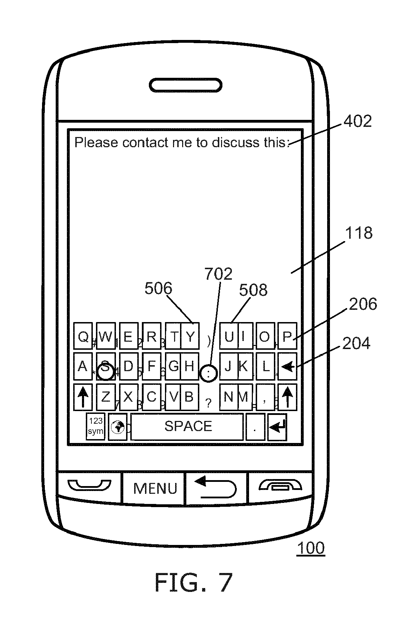

As shown in FIG. 6, the secondary characters 210, which in the present example include ")", ":", and "?", are displayed and selection of these secondary characters 210 is facilitated by the gesture illustrated in FIG. 5. In the example illustrated in FIG. 7, a touch at a location 702 that is associated with the secondary character 210 ":" is detected at 312 and the secondary character 210 ":" is entered and displayed in the field 402 on the touch-sensitive display 118 at 314.

For the purpose of the present example, the gesture between columns of keys is utilized to move columns of keys for selection of a secondary character and the keys are moved back to their original keyboard locations after selection of a secondary character. At 316, the keys are therefore not maintained at the locations to which they were moved and the keys in the columns 506, 508 are moved at 318, back to the original keyboard locations or positions illustrated in FIG. 2.

Rows of columns may also be moved by increasing the separation between the rows when a suitable gesture is detected, such as a gesture between the rows of the keys 206.

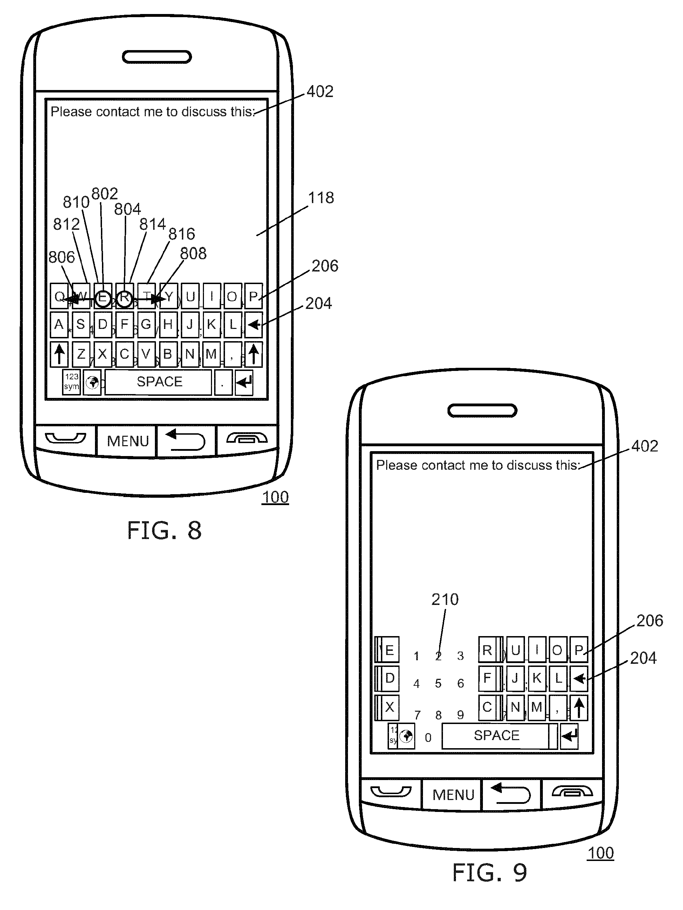

Referring to FIG. 8, a multi-touch gesture is detected and a key 206 is not selected. Instead, the gesture is detected at 308, including two detected touches that have origins 802, 804 and continue in the directions of the arrows 806, 808, respectively. The origins 802, 804 are located at areas associated with the keys 206 that are associated with the primary characters "E" and "R", and the touches of the multi-touch gesture move apart, in a reverse pinching gesture.

The keys 206 in the column 810 that includes the key associated with the character "E" and the adjacent column 812 to the left, are moved to the left such that the columns 810, 812 of keys 206 overlap the column 814 of keys 206 that includes the key associated with the character "Q". Similarly, the column 816 that includes the key associated with the character "R" and the adjacent column 818 to the right, are moved to the right such that the columns 816, 818 of keys 206 overlap the column 820 of keys 206 that includes the key associated with the character "Y". The space key also moves to the right and overlaps the key associated with the period and the key adjacent and to the left of the space key is moved to the left and overlaps the key 208 associated with the symbol function. The distance that the columns move may depend on the attributes of the gesture, such as the length or distance of the gesture, or may be a set distance.

The keys 206 are moved to facilitate entry of the numbers 0 through 9, as illustrated in FIG. 9. Any one of the numbers may be entered into the field 402 by a touch at the area associated with the number.

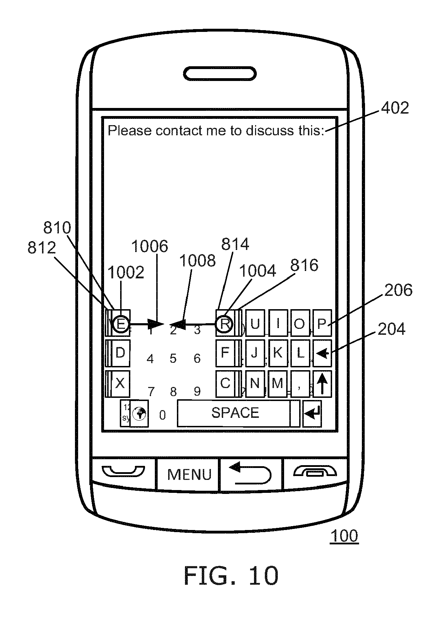

In this example, the reverse pinching gesture illustrated in FIG. 8 is utilized to move columns of keys for selection of secondary characters and the keys are not moved back to their original keyboard locations after selection of a secondary character. At 316, the keys are therefore maintained at the locations to which they were moved. A gesture is utilized to move the keys in the columns 810, 812, 816, 818 back to the original keyboard locations or positions illustrated in FIG. 2. As shown in FIG. 10, the gesture may be, for example, a multi-touch gesture including two detected touches that have origins 1002, 1004 and continue in the directions of the arrows 1006, 1008, respectively. The origins 1002, 1004 are located at areas associated with the keys 206 that are associated with the primary characters "E" and "R", and the touches of the multi-touch gesture move toward each other, in a pinching gesture.

Although not illustrated in the example flowchart of FIG. 3, multiple consecutive keyboard gestures may be detected before the keys 206 of the keyboard 204 are moved back to the original keyboard locations. Thus, consecutive keyboard gestures may be detected before a touch is detected at a location associated with a key 206 or before a touch is detected at a location associated with a secondary character 210. A first keyboard gesture moves keys 206 of the keyboard 204. A second or subsequent keyboard gesture may move further keys 206 of the keyboard 204. Thus, a plurality of keyboard gestures may be received and keys 206 of the keyboard 204 moved a plurality of consecutive times before selection of a key 206 associated with a primary character or selection of a secondary character 210.

Primary characters may also be entered by a touch at a location associated with a key 206, after some of the keys 206 are moved to facilitate secondary character 210 selection and prior to moving the keys 206 back to the original keyboard positions as illustrated in FIG. 2. Optionally, the keys 206 may be moved back to the original keyboard positons when a touch at a key 206 is detected. Alternatively, the keys 206 may be maintained in the locations to which they were moved until a secondary character is selected, until a gesture is received, or until any other suitable input is received.

The portable electronic device 100 is described to provide an example of one suitable electronic device. Many of the features or elements of the electronic device 100 described herein may be optional. Furthermore, the electronic device may also include other features that are not described herein and may differ in form.

Utilizing the method of the present disclosure, a primary character is entered when a touch is detected at an associated area on the touch-sensitive display 118. A secondary character may be entered utilizing a gesture to move keys of the keyboard without moving the entire keyboard, to facilitate entry of the secondary characters, followed by a touch on an area associated with the secondary character. The secondary characters are at least partially displayed between the keys associated with the primary characters to facilitate easy identification of the location of a secondary character. Changing an entire keyboard to display characters that are not previously displayed may be unnecessary, thereby reducing disruptions during typing.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying, on a touch-sensitive display, a keyboard including selectable keys associated with primary characters;
responsive to detecting a touch at a location associated with one of the keys, entering one of the primary characters associated with the one of the keys; and
responsive to detecting a gesture on the keyboard, moving at least a first key of the keys of the keyboard while maintaining a location of at least a second key of the keys of the keyboard, to facilitate selection of one of a plurality of secondary characters.

2. The method according to claim 1, comprising moving the first key back to a keyboard position when a further touch is detected at a location associated with one of the secondary characters.

3. The method according to claim 1 or 2, comprising, when a further touch is detected at a location associated with the one of the secondary characters, entering the one of the secondary characters, and moving the first key back to a keyboard position.

4. The method according to any of claims 1 to 3, wherein moving at least the first key comprises increasing a separation between columns of keys or between rows of keys.

5. The method according to any of claims 1 to 4, wherein moving comprises moving one of columns and rows of keys when the gesture comprises a swipe between the one of the columns and the rows of keys.

6. The method according to any of claims 1 to 5, wherein moving comprises separating one of rows and columns of keys by a distance determined based on the gesture.

7. The method according to any of claims 1 to 6, wherein, when the gesture comprises a gesture originating on the first key, moving comprises moving one of rows and columns of keys including the first key.

8. The method according to claim 7, wherein, when a further touch is detected at a location associated with the one of the secondary characters, entering the one of the secondary characters, and maintaining the one of rows and columns in a moved position.

9. The method according to claim 7 or 8, wherein the one of rows and columns of keys are maintained in a moved position until a further gesture to return the keys to the keyboard position, is detected.

10. The method according to any of claims 1 to 9, wherein, when the gesture comprises a multi-touch gesture originating on the first key and an adjacent key, moving comprises moving one of rows and columns of keys including the first key and the adjacent key by separating the one of rows and columns of keys including the first key and the adjacent key.

11. The method according to any of claims 1 to 10, wherein the parts of the secondary characters are displayed between the keys.

12. The method according to any of claims 1 to 11, wherein the parts of the secondary characters are displayed between the keys at lower contrast than the keyboard.

13. The method according to any of claims 1 to 12, wherein displaying comprises displaying utilizing attributes such that the keyboard appears on one level and the secondary characters appear on a second level that is below the keyboard.

14. A computer-readable medium having computer-readable code executable by at least one processor of the electronic device to perform the method of any of claims 1 to 13.

15. An electronic device comprising:
a touch-sensitive display to display a keyboard including selectable keys associated with primary characters, and at least parts of secondary characters between the keys; and
a processor coupled to the display to enter one of the primary characters associated with one of the keys when a touch is detected at a location associated with the one of the keys, and move at least one of the keys of the keyboard while maintain a location of at least one other of the keys of the keyboard, to facilitate selection of one of the secondary characters when a gesture is detected on the keyboard.

## Amended claims

### Amended claims in accordance with Rule 137(2) EPC.

**1.** A method comprising:
displaying, on a touch-sensitive display (118), a keyboard (204) including selectable keys (206) associated with primary characters;
responsive to detecting a touch at a location associated with one of the keys (206), entering one of the primary characters associated with the one of the keys (206); and
**characterized in that**
responsive to detecting a gesture on the keyboard (204), moving at least a first key of the keys of the keyboard (204) while maintaining a location of at least a second key of the keys of the keyboard (204), the first and second keys associated with primary characters, the first key being moved to expose one of a plurality of secondary characters (210) to facilitate selection of the one of a plurality of secondary characters (210).

**2.** The method according to claim 1, comprising moving the first key back to a keyboard position when a further touch is detected at a location associated with one of the secondary characters (210).

**3.** The method according to claim 2, comprising, entering the one of the secondary characters associated with the location of the further detected touch.

**4.** The method according to any of claims 1 to 3, wherein moving at least the first key comprises increasing a separation between columns of keys (206) or between rows of keys (206).

**5.** The method according to any of claims 1 to 4, wherein moving comprises moving one of columns and rows of keys (206) when the gesture comprises a swipe between the one of the columns and the rows of keys (206).

**6.** The method according to any of claims 1 to 5, wherein moving comprises separating one of rows and columns of keys (206) by a distance determined based on the gesture.

**7.** The method according to any of claims 1 to 6, wherein, when the gesture comprises a gesture originating on the first key, moving comprises moving one of rows and columns of keys (206) including the first key.

**8.** The method according to claim 7, wherein, when a further touch is detected at a location associated with the one of the secondary characters (210), entering the one of the secondary characters (210), and maintaining the one of rows and columns In a moved position.

**9.** The method according to claim 7 or 8, wherein the one of rows and columns of keys (206) are maintained In a moved position until a further gesture to return the keys (206) to the keyboard position, is detected.

**10.** The method according to any of claims 1 to 9, wherein, when the gesture comprises a multi-touch gesture originating on the first key and an adjacent key, moving comprises moving one of rows and columns of keys (206) including the first key and the adjacent key by separating the one of rows and columns of keys (206) including the first key and the adjacent key.

**11.** The method according to any of claims 1 to 10, wherein the parts of the secondary characters (210) are displayed between the keys (206).

**12.** The method according to any of claims 1 to 11, wherein the parts of the secondary characters (210) are displayed between the keys (206) at lower contrast than the keyboard (204).

**13.** The method according to any of claims 1 to 12, wherein displaying comprises displaying utilizing attributes such that the keyboard (204) appears on one level and the secondary characters (210) appear on a second level that is below the keyboard.

**14.** A computer-readable medium having computer-readable code executable by at least one processor of the electronic device (100) to perform the method of any of claims 1 to 13.

**15.** An electronic device (100) comprising:
a touch-sensitive display (118) to display a keyboard (204) including selectable keys (206) associated with primary characters; and
a processor (102) coupled to the display (118) to enter one of the primary characters associated with one of the keys (206) when a touch is detected at a location associated with the one of the keys (206);
**characterized in that** the touch-sensitive display (118) displays at least parts of secondary characters (210) between the keys (206); and
the processor is configured to move at least a first key of the keyboard (204) while maintaining a location of at least a second key of the keyboard (204), the first and second keys associated with primary characters, the first key being moved to expose one of a plurality of secondary characters (210) to facilitate selection of the one of the secondary characters (210) when a gesture Is detected on the keyboard (204).
